Europäisches Patentamt

European Patent Office

Office européen des brevets

(19)

(11) Veröffentlichungsnummer: **0 268 200 B1**

# EUROPÄISCHE PATENTSCHRIFT

(12)

(45) Veröffentlichungstag der Patentschrift: **22.01.92**

(51) Int. Cl.⁵: **F02F 7/00**, F02B 77/00

(21) Anmeldenummer: **87116652.6**

(22) Anmeldetag: **11.11.87**

(54) **Ventildeckel für den Zylinderkopf eines Verbrennungsmotors.**

(30) Priorität: **15.11.86 DE 3639218**

(43) Veröffentlichungstag der Anmeldung:
**25.05.88 Patentblatt 88/21**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
**DE-A- 3 141 627      FR-A- 1 035 878**
**FR-A- 2 526 864      GB-A- 1 263 077**
**GB-A- 2 065 225      US-A- 4 495 903**

(73) Patentinhaber: **Karl Joh Gummiwarenfabrik
GmbH
Lagerhausstrasse 19
W-6460 Gelnhausen(DE)**

Patentinhaber: **Joh, Günter
Kapellenweg 14
W-6460 Gelnhausen(DE)**

(72) Erfinder: **Joh, Günter
Kapellenweg 14
W-6460 Gelnhausen(DE)**

(74) Vertreter: **Knoblauch, Ulrich, Dr.-Ing.
Kühhornshofweg 10
W-6000 Frankfurt am Main 1(DE)**

**Beschreibung**

Die Erfindung bezieht sich auf einen Ventildekkel für den Zylinderkopf eines Verbrennungsmotors, mit einer an der dem Zylinderkopf zugekehrten Randfläche des Ventildeckels befestigten inkompressiblen Dichtung aus Gummi und mit Löchern zur Durchführung von Gewindebolzen zum Verbinden des Ventildeckels mit dem Zylinderkopf.

Bei einem bekannten Ventildeckel dieser Art ist die Dichtung in einer Nut in der Randfläche eingeklemmt, so daß sie bei der Handhabung des Ventildeckels, zum Beispiel beim Aufsetzen des Ventildeckels auf den Zylinderkopf, nicht aus der Nut herausfällt. Das Einsetzen der Dichtung in die Nut erfolgt manuell und ist arbeits-und zeitaufwendig. Um eine Längsdehnung und Wellung der inkompressiblen Dichtung beim Hineindrücken in die Nut zu vermeiden, hat der Nutquerschnitt ein Übermaß, so daß zwischen den sich berührenden Flächen von Nut und Dichtung praktisch keine Dichtwirkung und auch kaum eine Klemmwirkung auftritt. Letztere wird vielmehr durch seitliche Rippen oder Noppen an der Dichtung erreicht, die einer Dichtwirkung erst recht abträglich sind. Man läßt die Dichtung daher den Rand der Nut übergreifen und an den ebenen, der Nut benachbarten Randflächenbereichen anliegen, die leicht zu bearbeiten sind. Da die Dichtung in diesen Randflächenbereichen nicht eingekammert ist, wird das Dichtungsmaterial aufgrund der beim Festziehen des Ventildeckels an den Zylinderkopf bewirkten Querdehnung und der Erwärmung im Betrieb bleibend verformt, so daß die Dichtung nicht wiederverwendbar ist. Darüber hinaus führt die Querdehnung bei der üblichen Durchführung der Gewindebolzen durch Löcher in einem Randflansch des Ventildeckels und die Löcher in der Dichtung zum Einreißen der Dichtung durch die Gewindebolzen. Auch dies beeinträchtigt die Wiederverwendbarkeit.

Bei Ventildeckeln ohne Nut in der Randfläche und mit Durchführungslöchern für Gewindebolzen in einem Randflansch ergeben sich die gleichen Schwierigkeiten hinsichtlich Querdehnung und der Gefahr des Einreißens der Dichtung. Zusätzlich bereitet die Fixierung und Zentrierung der Dichtung an der Randfläche bei der Montage Schwierigkeiten.

Bei dem aus der FR-A-10 35 878 bekannten Ventildeckel, der ebenfalls dem Ventildeckel der eingangs genannten gattungsgemäßen Art entspricht, wird ein bereits vorgefertigter Dichtungsring aus einem bei einer tiefen Temperatur vulkanisierbaren Material in eine hinterschnittene Nut gedrückt und danach in dieser Einbaulage vulkanisiert. Die Herstellung eines solchen Ventildeckels mit Dichtung ist aufwendig, weil die Dichtung zunächst in einem Formwerkzeug fertiggestellt, dann in weiteren Arbeitsgängen in die Nut gedrückt und anschließend vulkanisiert werden muß. Darüber hinaus hat dieser Dichtungsring keine hinreichende Dichtwirkung, da er nicht in der Nut haftet.

Aus der AT-A 281 502 ist eine Brennkraftmaschine mit schallisolierender Verkleidung bekannt, bei der eine auf einer Seite offene Verschalung eine Dichtleiste Trägt, auf der ein Verschalungsdeckel aufliegt. Dieser ist mittels Stehbolzen mit mittig angeordnetem Sechskantkopf an einem Deckel des Motors befestigt. Der Verschalungsdeckel ist mit Bohrungen für den Durchtritt der äußeren Gewindeabschnitte der Stehbolzen versehen und unter beidseitiger Anlage von Gummiringen am Verschalungsdeckel mittels auf die Stehbolzen aufgeschraubter Muttern zum Kurbelwellenflansch hin verspannt. Hierbei können die Gummiringe verhältnismäßig weit radial ausweichen, so daß keine definierte Spannkraft auf die Dichtleisten ausgeübt wird und die Gefahr einer Undichtigkeit der Dichtleisten besteht. Andererseits kann bei zu hoher Verpressung der Dichtleisten und der Gummiringe aufgrund der dann nicht mehr hinreichenden Elastizität von Dichtleiste und Gummiringen die akustische Entkopplung nicht mehr gewährleistet sein.

Der aus der GB-A-12 63 077 bekannte Ventildeckel ist in zwei Teile unterteilt, zwischen denen zur Schallisolierung ein geschäumtes Gummielement ausgebildet ist, das mit Hilfe einer Einspannvorrichtung zwischen die beiden Ventildeckelteile eingebracht wird. Das Gummielement liegt mithin nicht zwischen dem Ventildeckel und dem Zylinderkopf. Außerdem ergäbe eine geschäumte funktionsbelassene Dichtung keine hinreichende Dichtwirkung des Ventildeckels im Kontaktbereich des Zylinderkopfes.

Der Erfindung liegt die Aufgabe zugrunde, einen Ventildeckel der gattungsgemäßen Art anzugeben, dessen Montage bei hoher Dichtigkeit zwischen Ventildeckel und Zylinderkopf einfacher ist.

Erfindungsgemäß ist diese Aufgabe dadurch gelöst, daß das Dichtungsmaterial unter Formung der Dichtung an der Randfläche des Ventildeckels, und unter Zwischenschaltung wenigstens eines Haftvermittlers, in thermisch erweichtem Zustand angespritzt ist und daß die Dichtung nach dem Abkühlen als erkaltete Form an der Randfläche festsitzt.

Bei dieser Ausbildung wird eine Querdehnung der Dichtung durch den Haftvermittler weitgehend vermieden. Die Dichtung braucht daher nach einer Demontage des Ventildeckels nicht grundsätzlich erneuert zu werden. Da die Dichtung gleichzeitig beim Anbringen an der Randfläche in die gewünschte Form gebracht wird, entfällt ein getrennter Arbeitsgang für die Ausbildung eines Dichtungsrings. Die Randfläche des Ventildeckels bildet gleichzeitig den einen Teil des für die Ausbildung der Dichtung erforderlichen Formwerkzeugs.

Ferner ist es möglich, daß die Randfläche eine umlaufende Nut zur Aufnahme eines Teils des Dichtungsmaterials aufweist. Dies führt zu einer Vergrößerung der wirksamen Haftungsfläche, da sich das Dichtungsmaterial beim Einspritzen in die Nut dicht an deren Wandung anlegt.

Vorzugsweise ist der die Dichtung aufnehmende Ventildeckelrand mit einem nach außen vorstehenden Flansch versehen. Hierbei kann nicht nur die dem Zylinderkopf zugekehrte Randfläche des Ventildeckels, sondern auch die dem Zylinderkopf abgekehrte Schulterfläche des Flansches als Widerlager für einen den Flansch umgreifenden Dichtungs-Formwerkzeugteil dienen, um diesen Dichtungs-Formwerkzeugteil beim Formen der Dichtung am Ventildeckel festzuhalten und gleichzeitig den durch die Nut in der Randfläche des Ventildeckels und den zweiten Dichtungs-Formwerkzeugteil begrenzten Hohlraum beim Einspritzen des Dichtungsmaterials dicht abzuschließen.

Sodann ist es günstig, wenn in den Durchführungslöchern jeweils eine einen durchgeführten Gewindebolzen dicht aufnehmende Gummihülse eingeknüpft ist, die die zur Abdichtung erforderliche Verformung der Dichtung ermöglicht. Dadurch wird eine schalldämmende und dennoch dichte Befestigung des Ventildeckels am Zylinderkopf ermöglicht, weil die Gewindebolzen nicht mehr unmittelbar mit dem Ventildeckel in Berührung stehen, so daß sie weniger Körperschall vom Zylinderkopf auf den wie ein Resonanzboden wirkenden Ventildeckel übertragen.

Ferner können die Durchführungslöcher im Boden des haubenförmigen Ventildeckels ausgebildet sein. Hierbei wird verhindert, daß die Dichtung von Gewindebolzen durchsetzt wird, so daß ihre Formgebung einfacher ist.

Bei den Gewindebolzen kann es sich um Stehbolzen mit Gewindeabschnitten an beiden Enden handeln, wobei die Länge des gewindefreien mittleren Abschnitts der Stehbolzen entsprechend der gewünschten Vorspannung der Dichtung und Gummihülsen gewählt ist. Hierbei kann der eine Gewindeabschnitt der Stehbolzen vor der Montage des Ventildeckels fest im Zylinderkopf eingeschraubt sein, so daß nur noch der Ventildeckel auf den Zylinderkopf aufgesetzt und Muttern auf den anderen Gewindeabschnitten der Stehbolzen (ggf. unter Zwischenschaltung von Unterlegscheiben) aufgeschraubt zu werden brauchen. Beides kann mittels eines Montage-Roboters rasch und auf einfache Weise durchgeführt werden, wobei die mittleren Abschnitte der Stehbolzen eine Wegbegrenzung für die Muttern darstellen.

Sodann kann dafür gesorgt sein, daß in jede Gummihülse zwei Ringscheiben aus Metall eingebettet sind und sie jeweils eine freiliegende Widerlagerfläche aufweisen. Diese Ringscheiben verhindern ein übermäßiges Wegdrücken des Gummimaterials der Hülsen beim Festziehen der Muttern.

Ferner kann der Ventildeckel mit Versteifungsrippen versehen sein, die nicht nur eine Versteifung des Ventildeckels, sondern bei Ausbildung der Durchführungslöcher im Ventildeckelboden auch eine gleichmäßige Übertragung der Spannkraft auf die Dichtung beim Festziehen der Muttern gewährleisten, so daß für eine gleichmäßige Vorspannung der Dichtung und eine gleichmäßige Dichtwirkung über den gesamten Umfang des Deckels gesorgt ist.

Außerdem ist es günstig, wenn das Dichtungsmaterial mittels eines in das Material des Ventildeckels eingedrückte Schneidkanten aufweisenden Formwerkzeugteils an der Randfläche des Ventildeckels angeformt ist. Dieses Formwerkzeugteil stellt eine dichte Verbindung zwischen einem gegebenenfalls unebenen Ventildeckelrand oder Flansch des Ventildeckelrandes und dem Formwerkzeugteil her, so daß die Gummimasse in den durch den Formwerkzeugteil und die Nut gebildeten Hohlraum auch unter sehr hohem Druck eingespritzt werden kann, ohne daß die Gummimasse zwischen dem Ventildeckel und dem Formwerkzeugteil austritt.

Die Erfindung und ihre Weiterbildungen werden nachstehend anhand der Zeichnungen eines bevorzugten Ausführungsbeispiels näher beschrieben. Es zeigen:

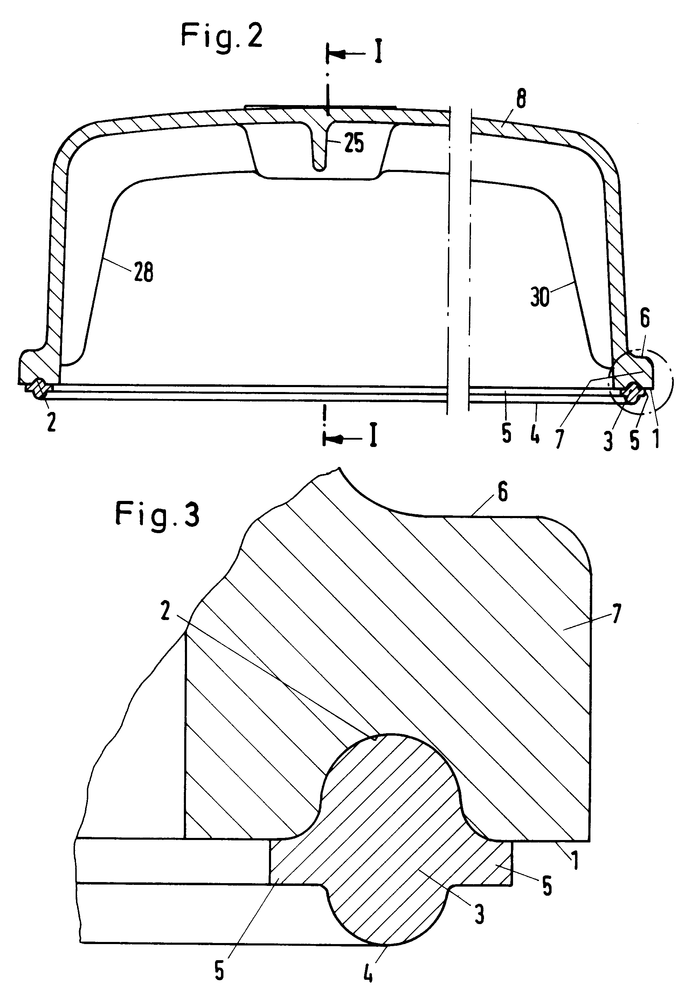

Fig. 1    einen Querschnitt durch einen erfindungsgemäßen Ventildeckel nach der Linie I-I der Fig. 2,

Fig. 2    den Querschnitt II-II der Fig. 1 im vergrößerten Maßstab und

Fig. 3    den Kreisausschnitt der Fig. 2 in vergrößertem Maßstab.

Der dargestellte Ventildeckel besteht aus Aluminium. Er dient zur Abdeckung des die Ventile aufweisenden Zylinderkopfes auf dem Zylinderblock eines Verbrennungsmotors und hat die Form einer Haube. In der dem (nicht dargestellten) Zylinderkopf zugekehrten Randfläche 1 ist der Ventildeckel mit einer umlaufenden, im Querschnitt etwa halbkreisförmigen Nut 2 versehen. Die Nut enthält eine Dichtung 3 aus temperatur- und ölbeständigem Gummi, bei dem es sich um Silicon-Gummi, Nitril-Gummi oder Polyacrylat-Gummi handeln kann. Der Gummi wird, unter Zwischenschaltung eines (nicht dargestellten) Haftvermittlers in thermisch erweichtem Zustand, in die Nut 2 eingespritzt, so daß er nach dem Abkühlen aus der Nut 2, unter Ausbildung einer Dichtlippe 4, vorsteht und mit seitlichen Flanschen 5 an der Randfläche 1 anliegt.

Bei dem Haftvermittler handelt es sich bei einer Silicon-Gummi-Dichtung vorzugsweise um Silan. Zuerst wird der Haftvermittler in Xylol gelöst und als dünne Schicht in die Nut 2 und auf die Randfläche neben der Nut 2 des vorgewärmten Ventildeckels eingebracht. Danach wird die auf etwa 110° erwärmte Dichtungs-Gummimasse eingespritzt, wobei sie nach weiterer Erwärmung auf 250°C mit dem Haftvermittler vernetzt. Zum Einspritzen wird ein Formwerkzeugteil mit Schneidkanten einerseits an der Randfläche 1 längs der Nut 2 und andererseits an der Oberseite 6 eines nach außen vorstehenden Flansches 7 des Ventildeckels angesetzt, wobei der Formwerkzeugteil diesen Flansch 7 umgreift. In dem durch den Formwerkzeugteil und die Nut 2 gebildeten Hohlraum wird dann die Gummimasse eingespritzt. Durch dieses "Anvulkanisieren" genannte Verfahren der Anbringung der Dichtung 3 wird gleichzeitig die Dichtung 3 gebildet und eine eventuelle Oberflächenrauhigkeit der Nut 2 ausgeglichen, so daß eine Oberflächenbearbeitung der Randfläche 1 und der Nut 2 zur Erzielung einer möglichst hohen Glätte und damit einer entsprechend hohen Dichtigkeit entfällt.

Bei anderen Gummiarten können zwei Schichten von Haftvermittlern verwendet werden, von denen der eine die Verbindung zum Metall und der andere die Verbindung zum Gummi herstellt.

Der Ventildeckel hat ferner in seinem Boden 8 drei Durchführungslöcher 9 zur Durchführung von als Stehbolzen ausgebildeten Gewindebolzen, von denen nur ein Gewindebolzen 10 dargestellt ist.

Dieser Gewindebolzen 10 hat an seinen Enden Gewindeabschnitte 11 und 12 und einen mittleren gewindefreien Abschnitt 13.

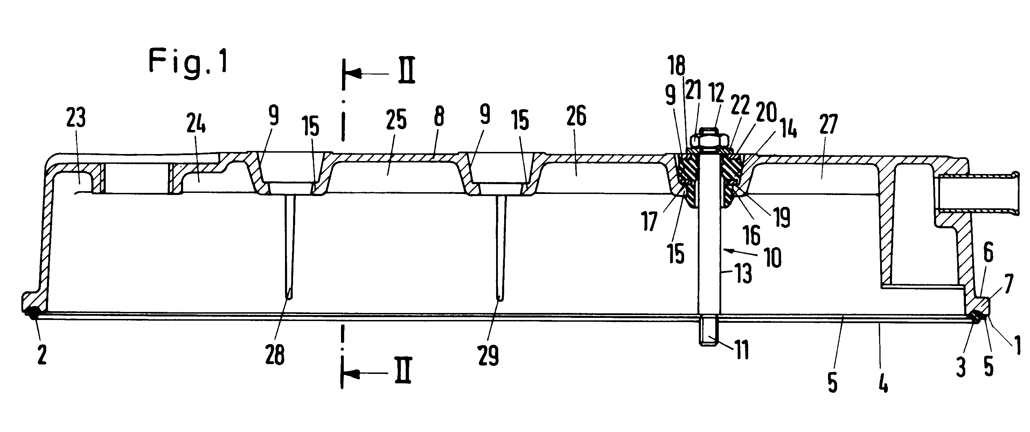

In die Durchführungslöcher 9 ist jeweils eine Gummihülse 14 eingeknüpft, deren Shore-Härte größer als die der Dichtung 3 ist. Von den Gummihülsen 14 ist nur eine dargestellt. Sie dienen der Aufnahme jeweils einer der Gewindebolzen 10, die als Stehbolzen ausgebildet sind (Fig. 1). Die Gummihülsen 14 bewirken dabei eine Abdichtung der Stehbolzen 10 gegen die vertieft und mit einem radial nach innen ragenden Flansch 15 ausgebildeten Durchführungslöcher 9, wobei jeder Flansch 15 in eine Ringnut 16 auf der Außenseite der in das betreffende Loch 9 eingesetzten Gummihülse 14 eingreift. In den Gummihülsen 14 sind jeweils zwei Ringscheiben 17 und 18 aus Metall so eingebettet, daß sie jeweils eine freiliegende Widerlagerfläche 19 und 20 aufweisen. Mit der Widerlagerfläche 19 liegt die Gummihülse 14 auf dem Flansch 15 auf, während sich an der Widerlagerfläche 20 der Ringscheibe 18 eine auf den oberen Gewindeabschnitt 12 geschraubte Mutter 21 über eine Unterlegscheibe 22 abstützt.

Bevor der Ventildeckel auf den Zylinderkopf montiert wird, sind die Gewindebolzen 10 mit ihren unteren Gewindeabschnitten 11 in entsprechenden Gewindebohrungen des Zylinderkopfes eingeschraubt. Der mit den Gummihülsen versehene Ventildeckel wird dann unter Durchführung der Gewindebolzen 10 durch die Gummihülsen 14 auf dem Zylinderkopf aufgesetzt. Anschließend werden die Unterlegscheiben 22 auf den Gewindeabschnitten 12 aufgesteckt und die Muttern 21 aufgeschraubt. Die Länge des gewindefreien Abschnitts 13 der Gewindebolzen 10 ist jeweils so bemessen, daß sich eine Wegbegrenzung der Muttern 21 ergibt und gleichzeitig die erforderliche Vorspannung in den Gummihülsen 14 und der Dichtung 3 ausgebildet wird, um eine hinreichende Abdichtung sicherzustellen.

Die Gummihülsen 14 stellen nicht nur eine Abdichtung sicher, sondern bewirken gleichzeitig eine Dämpfung der Übertragung von Körperschall aus dem Zylinderkopf über die Gewindebolzen 10 in den Ventildeckel, da sie eine unmittelbare (metallische) Berührung zwischen den Gewindebolzen 10 und dem Ventildeckel verhindern. Die Gummihülsen haben daher gleichzeitig die Funktion von Gummifedern und Schwingungsdämpfern.

Auf der Innenseite des Ventildeckels ausgebildete Versteifungsrippen 23 bis 30, die sich im Bereich der Durchführungslöcher 9 kreuzen, stellen eine gleichmäßige Übertragung der Spannkraft der Muttern 21 auf die Dichtung 3 und damit eine zuverlässige Abdichtung des Spalts zwischen Ventildeckel und Zylinderkopf sicher.

**Patentansprüche**

1. Ventildeckel für den Zylinderkopf eines Verbrennungsmotors, mit einer an der dem Zylinderkopf zugekehrten Randfläche des Ventildeckels befestigten inkompressiblen Dichtung aus Gummi und mit Löchern zur Durchführung von Gewindebolzen zum Verbinden des Ventildeckels mit dem Zylinderkopf, **dadurch gekennzeichnet,** daß das Dichtungsmaterial unter Formung der Dichtung (3) an der Randfläche (1) des Ventildeckels, und unter Zwischenschaltung wenigstens eines Haftvermittlers, in thermisch erweichtem Zustand angespritzt ist und daß die Dichtung (3) nach dem Abkühlen als erkaltete Form an der Randfläche (1) festsitzt.

2. Ventildeckel nach Anspruch 1, **dadurch gekennzeichnet,** daß die Randfläche (1) eine umlaufende Nut (2) zur Aufnahme eines Teils des Dichtungsmaterials aufweist.

3. Ventildeckel nach Anspruch 1 oder 2, **dadurch gekennzeichnet,** daß der die Dichtung (3) aufnehmende Ventildeckelrand mit einem nach außen vorstehenden Flansch (7) versehen ist.

4. Ventildeckel nach einem der Ansprüche 1 bis 3, **dadurch gekennzeichnet,** daß in den Durchführungslöchern (9) jeweils eine einen durchgeführten Gewindebolzen (10) dicht aufnehmende Gummihülse (14) eingeknüpft ist, die die zur Abdichtung erforderliche Verformung der Dichtung (3) ermöglicht.

5. Ventildeckel nach Anspruch 4, **dadurch gekennzeichnet,** daß die Durchführungslöcher (9) im Boden (8) des haubenförmigen Ventildeckels ausgebildet sind.

6. Ventildeckel nach einem der Ansprüche 1 bis 5, **dadurch gekennzeichnet,** daß die Gewindebolzen (10) Stehbolzen mit Gewindeabschnitten (11, 12) an beiden Enden sind, wobei die Länge des gewindefreien mittleren Abschnitts (13) der Stehbolzen entsprechend der gewünschten Vorspannung der Dichtung (3) und Gummihülsen (14) gewählt ist.

7. Ventildeckel nach Anspruch 4 oder 5, **dadurch gekennzeichnet,** daß in jede Gummihülse (14) zwei Ringscheiben (17, 18) aus Metall eingebettet sind und jeweils eine freiliegende Widerlagerfläche (19; 20) aufweisen.

8. Ventildeckel nach einem der Ansprüche 1 bis 7, **dadurch gekennzeichnet,** daß er mit Versteifungsrippen (23-30) versehen ist.

9. Ventildeckel nach einem der Ansprüche 1 bis 8, **dadurch gekennzeichnet,** daß das Dichtungsmaterial mittels eines in das Material des Ventildeckels eingedrückte Schneidkanten aufweisenden Formwerkzeugteils an der Randfläche (1) des Ventildeckels angeformt ist.

## Claims

1. Valve cover for the cylinder head of an internal combustion engine, with an incompressible rubber seal mounted on the edge surface of the valve cover facing towards the cylinder head, and with holes for the passage of studs for connection of the valve cover to the cylinder head, characterised in that the sealing material is injected in a thermally softened state onto the edge surface (1) of the valve cover, forming the seal (3), and with the interposition of at least one bonding agent, and that the seal (3) after cooling fits snugly on the edge surface (1) as a cooled shape.

2. Valve cover according to claim 1, characterised in that the edge surface (1) comprises a peripheral groove (2) for receiving a portion of the sealing material.

3. Valve cover according to claim 1 or 2, characterised in that the valve cover edge receiving the seal (3) is provided with an outwardly projecting flange (7).

4. Valve cover according to any of claims 1 to 3, characterised in that in each hole (9) for the passage of a stud is inserted a rubber sleeve (14) which receives an inserted stud (10) in sealing relationship and which allows the deformation of the seal (3) required for sealing.

5. Valve cover according to claim 4, characterised in that the holes (9) for the passage of studs are formed in the face (8) of the hood-shaped valve cover.

6. Valve cover according to any of claims 1 to 5, characterised in that the studs (10) are stay bolts with threaded sections (11, 12) at both ends, wherein the length of the thread-free central section (13) of the stay bolts is selected according to the desired prestressing of the seal (3) and rubber sleeves (14).

7. Valve cover according to claim 4 or 5, characterised in that two metal ring washers (17, 18) are embedded in each rubber sleeve (14) and in each case they comprise an exposed support surface (19; 20).

8. Valve cover according to any of claims 1 to 7, characterised in that it is provided with reinforcing ribs (23-30).

9. Valve cover according to any of claims 1 to 8, characterised in that the sealing material is moulded onto the edge surface (1) of the valve cover by means of a die portion comprising cutting edges and pressed into tile material of the valve cover.

## Revendications

1. Couvercle de soupape pour la culasse d'un moteur à combustion interne, comprenant un joint incompressible en caoutchouc fixé à la surface marginale du couvercle de soupape qui est tournée vers la culasse et qui comprend des trous pour le passage de boulons filetés destinés à la liaison du couvercle de soupape à la culasse, caractérisé en ce que le matériau d'étanchéité est pulvérisé quand il est à l'état thermiquement amolli pour former le joint (3) sur la surface marginale (1) du couvercle de soupape, après interposition d'au moins un agent adhésif, et en ce que le joint (3) est fixé contre la surface marginale (1) après refroidissement dans sa forme refroidie.

2. Couvercle de soupape selon la revendication 1, caractérisé en ce que la surface marginale (1) comprend une rainure périphérique (2) qui reçoit une partie du matériau du joint.

3. Couvercle de soupape selon la revendication 1 ou 2, caractérisé en ce que le bord du couvercle de soupape qui reçoit le joint (3) est muni d'une bride (7) en saillie vers l'extérieur.

4. Couvercle de soupape selon l'une quelconque des revendications 1 à 3, caractérisé en ce qu'on insère dans chacun des trous de traversée (9) une douille de caoutchouc (14) recevant de façon étanche un boulon fileté passant par ce trou, douille qui rend possible la déformation nécessaire du joint (3) pour obtenir l'étanchéité.

5. Couvercle de soupape selon la revendication 4, caractérisé en ce que les trous de traversée (9) sont constitués dans le fond (8) du couvercle de soupape en forme de capot.

6. Couvercle de soupape selon l'une quelconque des revendications 1 à 5, caractérisé en ce que les boulons filetés (10) sont constitués sous forme de goujons filetés comprenant des sections filetées (11, 12) à leurs deux extrémités, la longueur de la section centrale (13) sans filetage des goujons étant choisie de manière à correspondre à la précontrainte désirée pour le joint (3) et les douilles en caoutchouc (14).

7. Couvercle de soupape selon la revendication 4 ou 5, caractérisé en ce que sont noyés dans chaque douille de caoutchouc (4) deux disques circulaires (17, 18) en métal, chacun présentant une surface de butée libre (19; 20).

8. Couvercle de soupape selon l'une quelconque des revendications là 7, caractérisé en ce qu'il est muni de nervures de renforcement (23-30).

9. Couvercle de soupape selon l'une quelconque des revendications 1 à 8, caractérisé en ce que le matériau du joint est formé sur la surface marginale (1) du couvercle de soupape au moyen d'une partie d'outil de formage enfoncée dans le matériau du couvercle de soupape et comportant une arête de coupe.

Fig.1

EP 0 268 200 B1

EP 0 268 200 B1

Fig.2

Fig.3